# EUROPEAN PATENT APPLICATION

(11) **EP 1 677 236 A1**
(43) Date of publication of application: **05.07.2006**
(21) Application number: 04792977.3
(22) Date of filing: 20.10.2004
(51) Int. Cl.: G06Q 10/00

(54) **PRINT ORDERING SYSTEM AND METHOD**

(30) Priority: 24.10.2003 JP 2003365047
(71) Applicant: SONY CORPORATION, Tokyo 141-0001 (JP)
(72) Inventor: HIDAKA, Yasuhiro Sony Corporation, Tokyo 141-0001 (JP)
(74) Representative: Mills, Julia
(86) International application number: PCT/JP2004/015861
(87) International publication number: WO 2005/041093

(57) **Abstract**

A print-ordering system and a print-ordering method that can select image processing preferred by a user via a network and generate an appropriate print preferred by the user. The image processing preferred by the user can be selected via the network. Image data and order information are transmitted from a user terminal such as a PC to the server of a print system via the network. In a print-service system for placing a print order, the user can make desired settings on the image processing performed when executing printing via the network. Here, the details on the settings include outline emphasis, hue, color density, gradation, and contrast (the blueness of the sky, the color tone of a human skin, etc.) Further, a plurality of images is generated in the server by subjecting an order image to multilevel processing for each item of the settings and the images are transmitted to the user terminal so that the images are produced by the user terminal. The user selects a favorite image from among the images produced by the user terminal, transmits information about the selection result, and makes the server store the selection-result information.

## Description

### Technical Field

The present invention relates to a print-ordering system and a print-ordering method that allow a user to easily place an order for a print of image data stored in various terminals without visiting a minilab.

### Background Art

There have been proposed systems that can automatically place an order for a print of image data owned by the user, and produce and deliver the print by using a network such as the Internet. The systems facilitate placing an order for a photographic print and/or delivering the photographic print, even though the user does not visit the minilab (refer to Japanese Unexamined Patent Application Publication No. 10-78618, for example).

Further, there have been proposed print systems that perform image processing according to an order customized by a client and that produce a print preferred by the client (refer to Japanese Unexamined Patent Application Publication No. 2002-19195, for example).

However, it is difficult for the above-described known systems to select image processing desired by the user with efficiency and produce a print via the network. Therefore, the user has to visit the minilab, so as to make settings on an image-processing device, for example. Thus, it has been difficult for the user to enjoy adequate services.

Accordingly, it is an object of the present invention to provide a print-ordering system and a print-ordering method that can select image processing preferred by a user via a network and produce an appropriate print preferred by the user.

### Disclosure of Invention

For achieving the above-described object, a print-ordering system of the present invention includes print-control means which transfers image data to a print system, where the image data is transmitted from a user terminal via a network, and notifies the print system of image-processing mode of the image data and makes the print system execute print processing, image-processing means which performs image processing for an image(s) used for selecting the image-processing mode, selection-inquiry means that transmits the image-processing-mode-selection image(s) to the user terminal and that receives information about a result of a selection made by a user from among the image-processing-mode-selection image(s), and selection-result-storing means which stores the selection-result information, wherein the print-control unit determines the image-processing mode of which the print system is notified on the basis of the selection-result information stored in the selection-result-storing means.

Further, a print-ordering method of the present invention includes a print-control step adapted to transfer image data to a print system, where the image data is transmitted from a user terminal via a network, and notify the print system of image-processing mode of the image data and make the print system execute print processing, an image-processing step adapted to perform image processing for an image(s) used for selecting the image-processing mode, a selection-inquiry step adapted to transmit the image-processing-mode-selection image(s) to the user terminal and receive information about a result of a selection made by a user from among the image-processing-mode-selection image(s), and a selection-result-storing step adapted to store the selection-result information in a selection-result-storing unit. At the print-control step, the image-processing mode of which the print system is notified is determined on the basis of the selection-result information stored in the selection-result-storing unit.

According to the print-ordering system and the print-ordering method of the present invention, the image-processing-mode-selection images subjected to the image processing, so as to select the image-processing mode are transmitted to the user terminal. Further, the selection inquiry is performed for receiving the selection-result information transmitted from the user who saw the image-processing-mode-selection images, the selection-result information obtained for the selection inquiry is stored in the selection-result-storing unit, and the image-processing mode of which the print system is notified is determined according to the selection-result information. Subsequently, it becomes possible to select image processing preferred by the user via the network by performing simple operations and generate an appropriate print preferred by the user.

### Brief Description of the Drawings

Fig. 1 is a block diagram illustrating an example configuration of a print-ordering system according to an embodiment of the present invention.
Fig. 2 illustrates a screen image used for making customized settings on image-processing mode used in the embodiment shown in Fig. 1.
Fig. 3 illustrates another screen image used for making the customized settings on the image-processing mode used in the embodiment shown in Fig. 1.
Fig. 4 illustrates another screen image used for making the customized settings on the image-processing mode used in the embodiment shown in Fig. 1.
Fig. 5 is a flowchart illustrating example operations performed according to the embodiment shown in Fig. 1.

### Best Modes for Carrying Out the Invention

A print-service system according to embodiments of the present invention transmits image data and order information from a user terminal such as a PC to a server of a print system including various types of laboratories (photo laboratories) by using a network and places an order for a print. The print-service system allows a user to make preferred settings on image processing executed when printing is performed via the network. Here, the details on the settings relate to outline emphasis, hue, color density, gradation, and contrast (the blueness of the sky, the color tone of a human skin, and so forth).

Further, a plurality of images are generated in the server by subjecting an order image to several levels of processing for each of the settings and transmitted to a user terminal so that the images are produced thereon. The user selects a preferred image from among the images produced on the user terminal and transmits information about a result of the selection to the server so that the information is stored in the server.

Thus, it becomes possible to make the server store information about details on settings preferred by the user and execute print processing according to the setting details by performing simple operations. Subsequently, it becomes possible to obtain a printed result which is customized according to the settings preferred by the user.

### FIRST EMBODIMENT

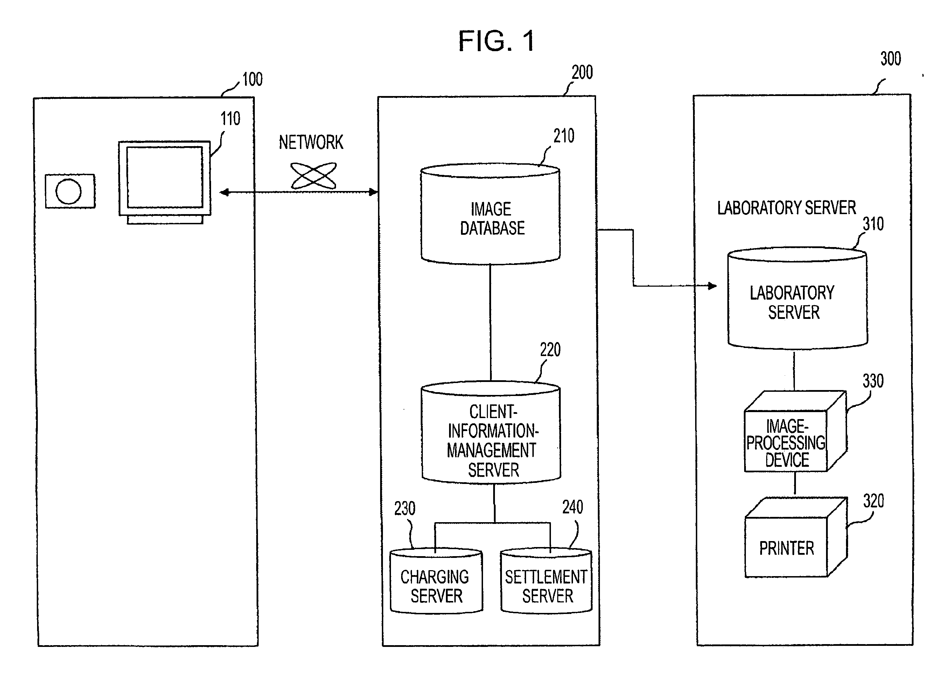

Fig. 1 is a block diagram showing the system configuration of a print-ordering system according to a first embodiment of the present invention.

The print-ordering system according to the first embodiment is formed on a center server (provider server) 200 provided between a user terminal 100 and a laboratory (print system) 300. That is to say, the center server 200 is connected to the user terminal 100 and the laboratory 300 via a network such as the Internet, so as to transmit and/or receive image data and various control-information items, and perform print processing according to the first embodiment.

Hereinafter, the above-described elements will be described in sequence.

First, the user terminal 100 is an image-processing terminal that is operated by a user and that has a communication function. The user terminal 100 includes a system of a personal computer (PC) 110 with an image-processing function, as shown in the drawing, and a mobile terminal or the like having the same function as that of the system.

Further, when image-processing-mode selection which will be described later is performed in the system of the first embodiment, an image is produced on a display and the propriety of image processing is practically determined according to the state of the image. Therefore, a display system that can produce an image which is clear to a certain extent is required.

Next, the center server 200 includes an image database 210, a client-information-management server 220, a charging server 230, and a settlement server 240.

The image database 210 is configured to store a print-order image, a sample image used for selecting image-processing mode, and so forth that are transmitted from the user terminal 100, and the client-information-management server 220 is configured to manage registration information of the user. The registration information of the user includes information about a designation address used for accessing a recording area for the order image of the user terminal, a delivery method, a settlement method, a basic printing method (the print size, the number of prints, and so forth). The above-described information can be registered and/or changed by performing an operation through the user terminal.

Further, according to the above-described system, information about the image-processing mode set for each user by performing the image-processing-mode selection that will be described later is registered with the client-information-management server 220, for example.

Items of the image-processing mode set in the first embodiment may be, for example, outline emphasis, hue, color density, gradation, contrast, brightness (that is to say, to deepen the blueness of the sky and/or sea, to heighten the reddish tinge of a human skin, a flower, and so forth, not to brighten dark part unnaturally, for example).

Further, when the print processing is performed, the charging server 230 and the settlement server 240 perform charging processing (e.g., fee calculation) and/or settlement processing (notifying a financial institution of the fee, debit processing, and so forth) for the print processing on the basis of settlement information or the like registered with the client-information-management server 220.

Further, the laboratory (print system) 300 includes a laboratory server 310, a printer 320, and an image-processing device 330. The laboratory server 310 receives the print-order image and management information (information about a basic printing method, a delivery method, and so forth on the basis of the user-registration information) attached thereto that are transmitted from the center server 200, and controls execution of the print processing according to the above-described information items. The printer 320 performs printing for the print-order image. Further, the image-processing device 330 performs image processing for an image printed by the printer 320. That is to say, the image-processing device 330 determines the image-processing mode for each of the various items according to an image-processing-mode-designation signal transmitted from the center server 200 and performs customized image processing.

Further, a printout document that is printed and output by the printer 320 is subjected to processing such as packing through predetermined steps and delivered by a person. When the printout is output via a printer installed in a house of the user, the processing is terminated when the printout is output from the printer. Either the delivery processing or the output processing can be selected according to the registration information.

In the above-described system, the center server 200 generates image-processing-mode-selection images subjected to various image processing and transmits the image-processing-mode-selection images to the user terminal 100, so as to make a display produce the image-processing-mode-selection images. Subsequently, the user selects a desired image from among the image-processing-mode-selection images and the system receives a result of the selection, whereby the image-processing mode is stored for each user. Then, if a print order is actually placed, the laboratory 300 is notified of the stored image-processing mode so that print processing is performed in the image-processing mode preferred by the user. Subsequently, a customized print image can be provided.

Hereinafter, specific examples will be described with reference to the attached drawings.

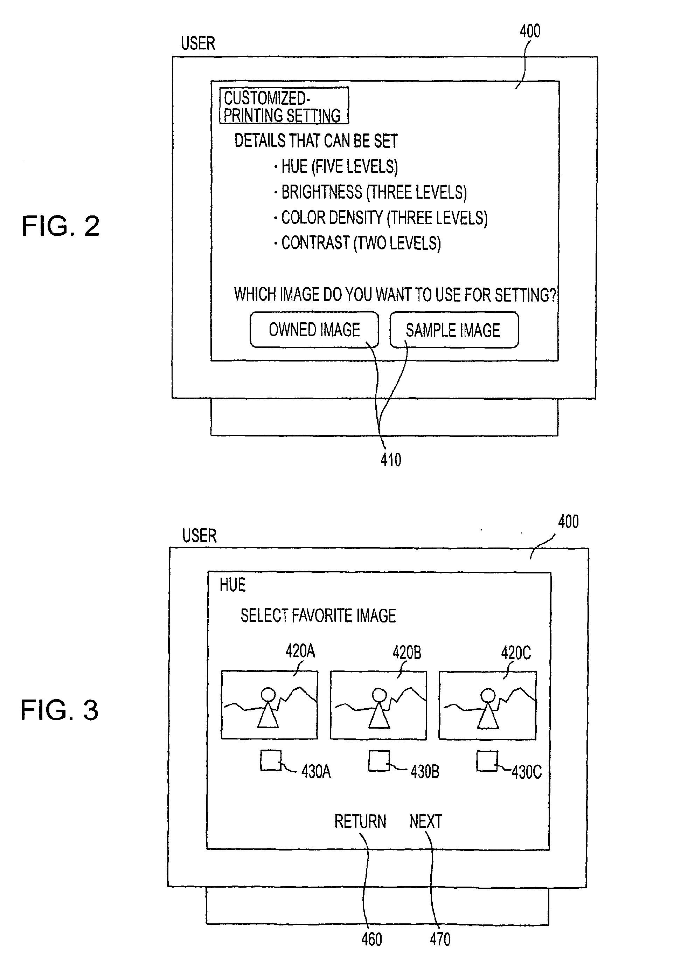

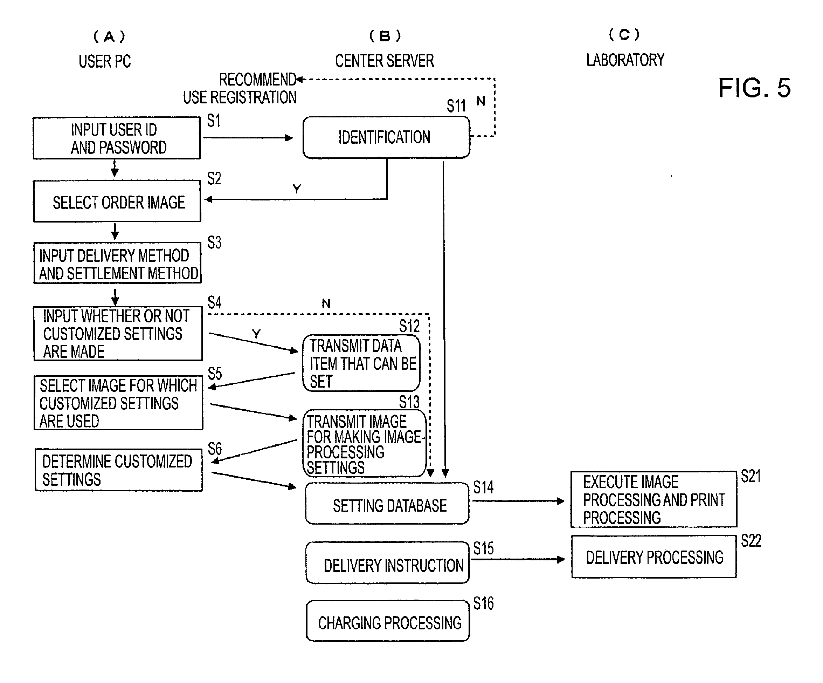

Each of Figs. 2, 3, and 4 illustrates an example setting screen image produced on the user terminal, where the screen image is used for selecting the image-processing mode. Fig. 5 is a flowchart showing operations performed for selecting the image-processing mode.

First, Fig. 2 shows a screen image 400 used for starting the image-processing-mode selection. An image used for selecting the image-processing mode is selected by using the screen image 400. That is to say, the screen image shows items (the hue, the brightness, the color density, the contrast, and so forth), as the image-processing mode, and the level number thereof. Further, the screen image shows information, so as to ask the user which of an image owned by the user and a sample image that had been prepared in advance by the center server the user wants to use, as an image used for the above-described setting processing. Here, the user presses down an image-selection button 410 formed as a touch panel, so as to select the image used for achieving the mode selection. For example, if the user selects the owned image, the image data is transmitted from the user terminal 100 to the center server 200 and the center server 200 performs the image processing for each of the items. Further, if the user selects the sample image, the center server 200 subjects the sample image stored in the database to the image processing for each of the items.

Further, the user may select a predetermined item from among the items that are shown in the screen image 400 and that can be set, as the image-processing mode, and notify the center server 200 of the predetermined item so that the image processing is performed only for the predetermined item.

Next, Fig. 3 shows a screen image used for selecting hue mode. Image data processed by the center server 200 in three-level hue mode is transmitted to the user terminal 100. Then, three images 420A, 420B, and 420C, and checkboxes 430A, 430B, and 430C used for checking the three images are shown in the display screen image 400, as shown in Fig. 3. The user visually recognizes the above-described images and boxes, selects the image with desired hue, and marks the checkbox corresponding to the selected image.

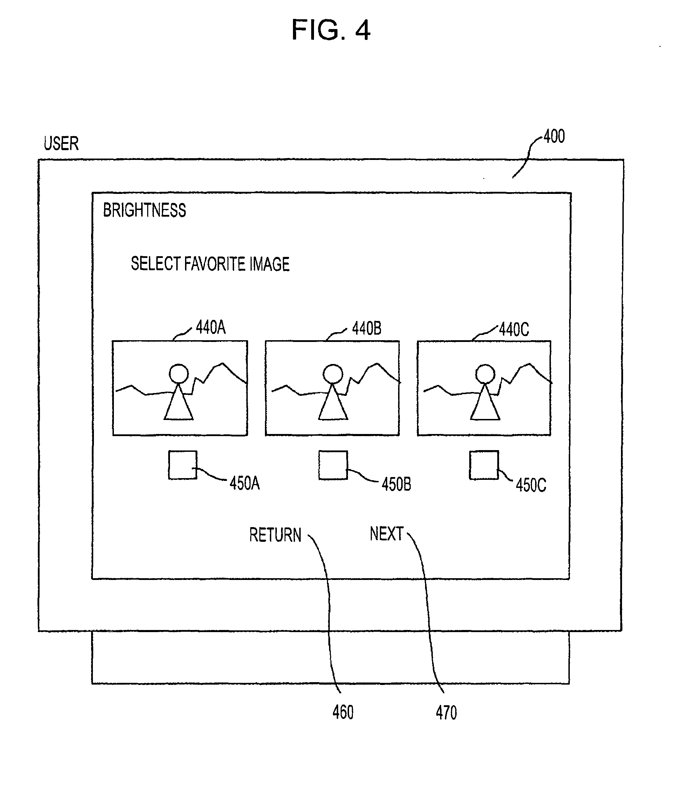

Next, Fig. 4 shows a screen image used for selecting brightness mode. Image data processed by the center server 200 in three-level brightness mode is transmitted to the user terminal 100. Then, three images 440A, 440B, and 440C, and checkboxes 450A, 450B, and 450C used for checking the three images are shown in the display screen image 400, as shown in Fig. 4. The user visually recognizes the above-described images and boxes, selects the image with desired brightness, and marks the checkbox corresponding to the selected image.

The mode selection for each of the items is achieved by updating the screen image by using a return key 460 and a next key 470.

The image-processing mode selected by performing the above-described processing is accepted by operating a completion key (not shown), for example. Information about the accepted image-processing mode is transmitted from the user terminal 100 to the center server 200 so that the center server 200 stores the image-processing-mode information for each user, as client information which is referred to when a print order is placed. The client information affects image processing performed when printing is executed.

Next, print-order operations will be described with reference to a flowchart shown in Fig. 5. Fig. 5(A) shows operations performed on the user-terminal side, Fig. 5(B) shows operations performed on the center-server side, and Fig. 5(C) shows operations performed on the laboratory side.

First, a user ID and a password are input via the user terminal 100 (step S1) and identification is performed by the center server 200 (step S11). If the identification is failed, use registration is recommended. When the identification is made, a printer order is permitted, and a printer-order image is selected via the user terminal 100 (step S2).

Then, information about a delivery method and a settlement method is transmitted (step S3), and it is determined whether or not customized settings should be made (step S4). If it is determined that the customized settings should not be made, the image processing is performed according to the details on the image-processing mode that had been registered, and print processing, delivery processing, charging processing, and so forth are performed (steps S14, S15, S16, S21, and S22).

Further, when the customized settings are made, transmission of the items that can be set (step S12), determination of an image used for making the settings (step S5), and transmission of the image-processing-setting image (step S13) are achieved in sequence, as described above, so that the customized settings of the image-processing mode are determined (step S6) and information about the customized settings is registered with the database (step S14) .

After that, the image processing is performed in the image-processing mode of which details are determined by the newly made customized settings, and the print processing, the delivery processing, the charging processing, and so forth are performed (steps S15, S16, S21, and S22).

Further, according to the above-described embodiment, the operations of the print-ordering system are achieved by a computer which reads and executes a control program. Therefore, a program adapted to achieve the above-described operations also constitutes the present invention. The above-described program is stored in various recording mediums including a compact-disk read-only memory (CD-ROM), a hard disk, a semiconductor memory, and so forth, and read and executed by a computer.

Further, the above-described embodiment proposes the method of producing a plurality of images with different settings, as shown in Figs. 3 and 4, as a method for producing an image used for making settings. However, a single image may be divided into a plurality of parts and different settings may be made for the plurality of parts, so as to reduce the amount of data for transmission. Further, when settings on hue and/or color density are made, an image of a low resolution may be used, whereby the same advantages as those of the above-described embodiment can also be obtained.

## Claims

1. A print-ordering system comprising:
print-control means which transfers image data to a print system, where the image data is transmitted from a user terminal via a network, and notifies the print system of image-processing mode of the image data and makes the print system execute print processing;
image-processing means which performs image processing for an image(s) used for selecting the image-processing mode;
selection-inquiry means that transmits the image-processing-mode-selection image(s) to the user terminal and that receives information about a result of selection made by a user from among the image-processing-mode-selection image(s); and
selection-result-storing means which stores the selection-result information,
wherein the print-control means determines the image-processing mode of which the print system is notified on the basis of the selection-result information stored in the selection-result-storing means.

2. A print-ordering system according to Claim 1, wherein the image-processing means performs multilevel-image processing for the image-processing mode and the selection-inquiry means transmits the at least two image-processing-mode-selection images obtained by performing the multilevel-image processing to the user terminal so that the user makes selection.

3. A print-ordering system according to Claim 1, wherein the image-processing means performs the image processing for either a sample image stored in an image database in advance or the image data transmitted from the user terminal.

4. A print-ordering system according to Claim 3, further comprising means adapted to make an inquiry about which of the sample image and the image data of the user the user wants to select, as the image-processing-mode-selection image, via the user terminal, wherein the image-processing-mode-selection image is selected and the image processing is performed according to information about a result of the selection made by the user for the inquiry.

5. A print-ordering system according to Claim 1, further comprising means adapted to ask the user about a type of the image-processing mode in which the image-processing means performs the image processing via the user terminal, wherein the type of the image-processing mode is determined according to a result of selection made by the user for the inquiry.

6. A print-ordering system according to Claim 1, wherein the image-processing mode includes at least one of outline emphasis, hue, color density, gradation, and contrast.

7. A print-ordering method comprising:
a print-control step adapted to transfer image data to a print system, where the image data is transmitted from a user terminal via a network, and notify the print system of image-processing mode of the image data and make the print system execute print processing;
an image-processing step adapted to perform image processing for an image(s) used for selecting the image-processing mode;
a selection-inquiry step adapted to transmit the image-processing-mode-selection image(s) to the user terminal and receive information about a result of selection made by a user from among the image-processing-mode-selection image(s); and
a selection-result-storing step adapted to store the selection-result information in selection-result-storing means,
wherein, at the print-control step, the image-processing mode of which the print system is notified is determined on the basis of the selection-result information stored in the selection-result-storing means.

8. A print-ordering method according to Claim 7, wherein, at the image-processing step, multilevel-image processing for the image-processing mode is performed, and at the selection-inquiry step, the at least two image-processing-mode-selection images obtained by performing the multilevel-image processing are transmitted to the user terminal so that the user makes selection.

9. A print-ordering method according to Claim 7, wherein, at the image-processing step, the image processing is performed for either a sample image stored in an image database in advance or the image data transmitted from the user terminal.

10. A print-ordering method according to Claim 9, further comprising• the step of making an inquiry about which of the sample image and the image data of the user the user wants to select, as the image-processing-mode-selection image, via the user terminal, wherein the image-processing-mode-selection image is selected and the image processing is performed according to information about a result of the selection made by the user for the inquiry.

11. A print-ordering method according to Claim 7, further comprising the step of asking the user about a type of the image-processing mode in which the image processing is performed at the image-processing step via the user terminal, wherein the type of the image-processing mode is determined according to a result of selection made by the user for the inquiry.

12. A print-ordering method according to Claim 7, wherein the image-processing mode includes at least one of outline emphasis, hue, color density, gradation, and contrast.

13. A program that is computer readable and adapted to control a print-ordering system which produces a print of a print-order image stored in a user terminal by using a print system, the program comprising:
a print-control step adapted to transfer image data to a print system, where the image data is transmitted from a user terminal via a network, and notify the print system of image-processing mode of the image data and make the print system execute print processing;
an image-processing step adapted to perform image processing for an image(s) used for selecting the image-processing mode;
a selection-inquiry step adapted to transmit the image-processing-mode-selection image(s) to the user terminal and receive information about a result of selection made by a user from among the image-processing-mode-selection image(s); and
a selection-result-storing step adapted to store the selection-result information in selection-result-storing means,
wherein, at the print-control step, the image-processing mode of which the print system is notified is determined on the basis of the selection-result information stored in the selection-result-storing means.

14. A program according to Claim 13, wherein, at the image-processing step, multilevel-image processing for the image-processing mode is performed, and at the selection-inquiry step, the at least two image-processing-mode-selection images obtained by performing the multilevel-image processing are transmitted to the user terminal so that the user makes selection.

15. A program according to Claim 13, wherein, at the image-processing step, the image processing is performed for either a sample image stored in an image database in advance or the image data transmitted from the user terminal.

16. A program according to Claim 15, further comprising the step of making an inquiry about which of the sample image and the image data of the user the user wants to select, as the image-processing-mode-selection image, via the user terminal, wherein the image-processing-mode-selection image is selected and the image processing is performed according to information about a result of the selection made by the user for the inquiry.

17. A program according to Claim 13, further comprising the step of asking the user about a type of the image-processing mode in which the image processing is performed at the image-processing step via the user terminal, wherein the type of the image-processing mode is determined according to a result of selection made by the user for the inquiry.

18. A program according to Claim 13, wherein the image-processing mode includes at least one of outline emphasis, hue, color density, gradation, and contrast.
